# EUROPÄISCHE PATENTANMELDUNG

(11) **EP 1 857 355 A2**
(43) Veröffentlichungstag der Anmeldung: **21.11.2007**
(21) Anmeldenummer: 07450089.3
(22) Anmeldetag: 15.05.2007
(51) Int. Cl.: B62M 1/04

(54) **Antriebsmechanismus für ein Fahrrad**

(30) Priorität: 17.05.2006 AT 8582006
(71) Anmelder: Popa, Danut, 8482 Gosdorf (AT)
(72) Erfinder: Popa, Danut, 8482 Gosdorf (AT)
(74) Vertreter: Wildhack, Helmut

(57) **Zusammenfassung**

Die Erfindung betrifft einen Antriebsmechanismus umfassend zumindest einen unter Krafteinwirkung linear in ihrer Länge veränderbare Arme bzw. Linearführungen (40,40a), wobei zumindest ein flexibles Zugmittel (14,14a) vorgesehen ist, das durch die Längenveränderung des jeweiligen Arms (40,40a) kraftbeaufschlagt wird und seine Bewegung auf zumindest eine Welle bzw. Antriebswelle (16) übertragen kann.

Erfindungsgemäß ist vorgesehen, dass die Arme (40,40a) gegeneinander verschwenkbar gelagert sind.

## Beschreibung

Die Erfindung betrifft einen Antriebsmechanismus für beispielsweise ein Fahrrad.

Die bekannteste Anwendung der Erzeugung einer Rotationsbewegung mit Hilfe der Muskelkraft kommt vom Fahrrad. Das bekannteste Fahrrad, mit kreisförmig bewegenden Pedalen, hat einen Wirkungsgrad von ca. 70%, wenn dieses von einem erfahrenen Anwender benutzt wird. Das impliziert Verluste von ca. 30%, oder eine Reserve von ca. 100*30/70 = 42%, wenn die Verluste beseitigt werden.

Dieses Problem ist bekannt und es gab Bemühungen, die Verluste zu reduzieren, insbesondere in die folgenden drei Richtungen:
1. Es wurde ein Mechanismus mit Pedalen eingesetzt, die in einem Winkel von ca. 45° arbeiten können, wie z.B. in der US 4,574,649, der CH 185 821 oder der US 4,421,334.
2. Es wurden Pedale mit Hebeln eingesetzt, die sich in einem viel kleineren Winkel als 180° bewegen, wie z.B. in der US 3,375,023, der US 3,661,404, der US 3,984,129, der US 3,834,733 oder der DE 43 29 814.
3. Es wurde ein Mechanismus mit linearer Bewegung der Pedalen eingesetzt, wie z.B. in der US 4,169,609, der US 2003/0020254, der US 2003/0173755 oder der DE 40 16 401.

Die erste und zweite Richtung sind jedoch mit den folgenden Nachteilen behaftet:
- Die Änderung der Übersetzung mit Bowden-Zügen unter Anwendung großer Kräfte und auf eine Entfernung von ca. 40 cm oder mehr ist auf Dauer fraglich.
- Die Änderung der Übersetzung, mit Ausnahme der Bauweise in der DE 43 29 814, ändert die Lage (Höhe) des Pedalhebels.
- Ein theoretischer Wirkungsgrad von 100% ist unmöglich, weil der Fuß immer senkrecht auf den Pedalhebel drücken und zugleich das flexible Zugmittel immer senkrecht zum Pedalhebel stehen müsste, was nicht realisierbar ist.
- Der Wirkungsgrad hängt von der Übersetzung ab, weil der Winkel zwischen dem Hebel und dem flexiblen Zugmittel eine variable Größe ist.

Die dritte Richtung ist die einzige, die einen theoretischen Wirkungsgrad von 100% gewährleistet. Als theoretischer Wirkungsgrad wird hier der Wirkungsgrad eines Mechanismus verstanden, bei dem die Reibungskräfte, das Gewicht der Komponenten und die Biegekraft eines flexiblen Zugmittels nicht berücksichtigt werden.

Diese dritte Richtung ist jedoch mit folgenden Nachteilen behaftet:
- Die Pedale benötigen Führungen, die ziemlich viel Platz in Anspruch nehmen.
- Außerdem wird bei einer Ausführung wie z.B. in der US 4,169,609, die Bodenfreiheit des Vehikels von der Länge der Pedalführungen begrenzt.

Alle drei oben genannten Richtungen weisen die folgenden Nachteile auf:
- Der Anwender muss die Bewegungsrichtung der Füße von oben nach unten und umgekehrt abrupt ändern, was anatomisch eine große Belastung darstellt und auch, insbesondere bei dem Richtungswechsel nach oben, zu Energieverlusten führt, weil das Gewicht des Beines zunächst schnell abgebremst und dann nach oben beschleunigt werden muss. Die kinetische Energie des relativ schweren Beines geht verloren, während bei dem "normalen" Fahrrad diese Energie die Pedale noch antreibt.
- Die Füße bewegen sich in eine quasi-gerade oder gerade, vorgegebene Richtung, parallel zueinander. Die ideale Bewegung für die Füße ist jedoch, wie beim "normalen" Fahrrad, die Rotationsbewegung oder zumindest eine kurvenförmige Bewegung, die eine sanfte Änderung der Bewegungsrichtung erlaubt.

Es ist somit Aufgabe der vorliegenden Erfindung einen effizienten und gleichzeitig komfortablen Antriebsmechanismus zu schaffen.

Diese Aufgabe wird durch die Merkmale des Anspruchs 1 gelöst.

Der erfindungsgemäße Antriebsmechanismus vereint die Vorteile eines linearen Antriebes mit den Vorteilen eines Antriebes mit kreisförmig bewegenden Pedalen. Dabei wird der theoretische Wirkungsgrad von 100% eines linearen Antriebes mit dem größten Vorteil des Kurbelantriebes, nämlich der sanften Änderung der Bewegungsrichtung der Füße, kombiniert und es wird die effiziente, kraftsparende Bewegung eines Vehikels mit Hilfe von Muskelkraft unter geringer Beanspruchung des Körpers gestattet.

Außerdem wird der theoretische Wirkungsgrad von 100% und eine bessere Verwendung der Muskulatur des Menschen erreicht, um mehr Leistung mit weniger Beanspruchung zu erzielen.

Die abhängigen Ansprüche stellen vorteilhafte Ausgestaltungen der Erfindung dar.

Eine konstruktiv einfache und vorteilhafte Ausgestaltung wird durch die Merkmale des Anspruchs 2 gewährleistet.

Durch die teleskopartige Ausgestaltung der Arme gemäß Anspruch 3 wird gleichzeitig ausreichende Bodenfreiheit geschaffen und die Verletzungsgefahr gemindert. Durch den teleskopartigen Aufbau der Arme lässt sich eine geringere Gesamtlänge der Arme erzielen. Wenn z.B. der Mindestabstand zwischen Pedal und Boden 120 mm und der Hub 340 mm beträgt, die einzelnen Teile des Armes jeweils die gleiche Länge aufweisen und wenn eine Länge von 100 mm des Teiles 3 bzw. 2 bei komplett ausgestrecktem Arm im Teil 2 bzw. 1 bleiben muss, dann ergibt sich die Höhe des oberen Endes des Armes als: 120 + 340 + 270 = 730 mm. Durch die Verwendung von mehreren Teilen kann diese Höhe noch kleiner werden, oder die oben genannte Länge von 100 mm kann größer werden.

Aus dem Stand der Technik ist es beispielsweise bekannt, die lineare Bewegung der Pedale mit einem Schlitten und einer linearen Führung zu realisieren. Die Laufflächen brauchen ein Schmiermittel und das verursacht langfristig eine Steigerung der Reibung, weil Staub und Schmutz an diesen Flächen haften. Die Verwendung von Schutzmanschetten oder ähnlichen Schutzmaßnahmen führen zur Steigerung des Luftwiderstandes, neuen Verlusten für die Verformung des Schutzmaterials und zu längeren Führungen weil z.B. Faltenbälge noch ca. 1/3 der Hublänge für den Einbau und Platz für die Befestigung benötigen. Linearführungen mit Schlitten haben sich in der Technik nur in relativ geschützter Umgebung bewährt, wie z.B. in Produktionshallen bei Werkzeugmaschinen, während im Freien, wo Wasser, Staub und Schmutz vorhanden sind teleskopartig gebaute Linearführungen besser geeignet sind.

Durch die geschlossene Konstruktionsweise der teleskopartig gebauten Arme bzw. Linearführungen ist die Berührungsfläche der zwei oder mehreren ineinander schiebenden Teile gut geschützt und garantiert für lange Zeit kleine Reibungskräfte.

Durch die Merkmale des Anspruch 4 bewirkt die Bewegung des gemeinsamen Zugmittels eine gleichzeitige Hebung der jeweils anderen Pedale nach oben in die Ausgangsposition des jeweils anderen Fußes. Sobald sich die Pedale hoch genug befindet, wird sie vom linken Fuß gedrückt.

Durch die weiteren alternativen Merkmale des Anspruch 4 bzw. der Ausbildung von getrennten Zugmitteln können die Füße vorteilhafterweise unabhängig voneinander bewegt werden.

Die Merkmale des Anspruchs 5 bewirken eine Speicherung der kinetischen Energie in der Feder, wodurch der nach unten drückende Fuß in seiner Bewegung nach unten unterstützt wird, und eine kontinuierliche Belastung der Welle in dem Moment, wo der rechte Fuß seine Bewegung vom oberen toten Punkt zum unteren toten Punkt beginnt, gewährleistet wird.

Die Merkmale des Anspruchs 6 bewirken ebenfalls eine Speicherung der kinetischen Energie in der Feder und bringen die Pedale in ihre jeweils oberen Ausgangspunkte.

Die elastischen Elemente sind konstruktiv einfach und vorteilhaft gemäß den Merkmalen der Anspruchs 5 bzw. 6 angeordnet.

Die starre und unbewegliche Befestigung der Pedale gemäß Anspruch 7 bringt den Vorteil, dass der Weg der Pedale verlängert wird, indem die Pedale mit Ferse und Vorderfuß gedrückt wird bis das Bein völlig ausgestreckt ist und dennoch kann die Pedale noch mit dem Vorderfuß zusätzlich bewegt werden.

Weiters wird durch die Drehbarkeit der Pedalen gewährleistet, dass die Füße sich auf den Pedalen in natürlicher Haltung, ähnlich wie beim Gehen stützen können, weshalb auch ein besserer Komfort zu erwarten ist. Die Pedale können außerdem zur Innenseite des Antriebsmechanismus gedreht werden, um weniger Platz fürs Parken oder Transport in Anspruch zu nehmen.

Wenn eine Verdrehbarkeit der Pedalen nicht gewünscht ist, kann diese durch die weiteren Merkmale des Anspruchs 7 verhindert werden.

Die Merkmale des Anspruchs 8 gewährleisten, dass die Pedale gleichzeitig mit Vorderfuß und Ferse gedrückt werden kann. Man erreicht damit eine bessere Verwendung der Bein- und Fußmuskulatur, weil der Anwender mit der gleichen Anstrengung eine größere Kraft aufbringen kann.

Um die Kraft effizient nutzen zu können, ist es vorteilhaft die Merkmale der Ansprüche 9 und 10 vorzusehen.

Die Merkmale der Ansprüche 11 bis 14 beschreiben vorteilhaft ausgestaltete Fahrräder.

Ein erfindungsgemäßer Antriebsmechanismus verursacht somit weniger Energieverluste und erlaubt eine bessere Verwendung der Muskulatur. Der Wirkungsgrad der Mensch-Vehikel-Einheit steigt weil die Kontaktflächen zwischen den bewegenden Teilen gegen Staub, Schmutz und Wasser besser geschützt sind, weil die teleskopartigen Arme keine Faltenbälge oder anderen Schutzeinrichtungen benötigen und weniger Luftwiderstand als ein Schlitten samt Führung erzeugen, weil jeder Fuß das Pedal in die optimale Richtung unabhängig von der Bewegungsrichtung des anderen Pedals bewegen kann und weil kinetische Energie am Ende jedes Pedalhubes gespeichert und dem anderen Pedal am Anfang seines Hubes zur Verfügung gestellt werden kann.

Weitere Vorteile und Ausgestaltungen der Erfindung ergeben sich aus der Beschreibung und den beiliegenden Zeichnungen.

Alle erläuterten Merkmale sind nicht nur in der jeweils angegebenen Kombination, sondern auch in anderen Kombinationen oder in Alleinstellung verwendbar, ohne den Rahmen der Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.
Fig. 1 zeigt eine Ausführungsform eines teleskopartigen Arms aus Profilen in Vorderansicht, Seitenansicht sowie Draufsicht.
Fig. 2 zeigt eine weitere Ausführungsform eines teleskopartigen Arms aus Röhren in Vorderansicht und Seitenansicht.
Fig. 2a zeigt eine vergrößerte Detailansicht von Fig. 2.
Fig. 3 zeigt eine Ausführungsform eines Antriebsmechanismus.
Fig. 4 zeigt einen Arm mit elastischem Element.
Fig. 4a zeigt eine weitere Ausführungsform eines Armes.
Fig. 5 zeigt eine weitere Ausführungsform eines Antriebsmechanismus.
Fig. 6 zeigt eine Ausführungsform eines schwenkbaren teleskopartigen Arms.
Fig. 6a zeigt, wie die Muskelkraft eines durchschnittlichen Fahrradfahrers auf das Pedal wirkt.
Fig. 7 zeigt die durchschnittliche Verteilung der Kräfte auf Ferse und Vorderfuß beim Menschen.
Fig. 8 zeigt eine Ausführungsform eines Antriebsrades des Freilaufs in Seitenansicht und Vorderansicht.
Fig. 9, 10 und Fig. 11 zeigen Ausführungsformen eines Fahrrades mit dem erfindungsgemäßen Antriebsmechanismus.

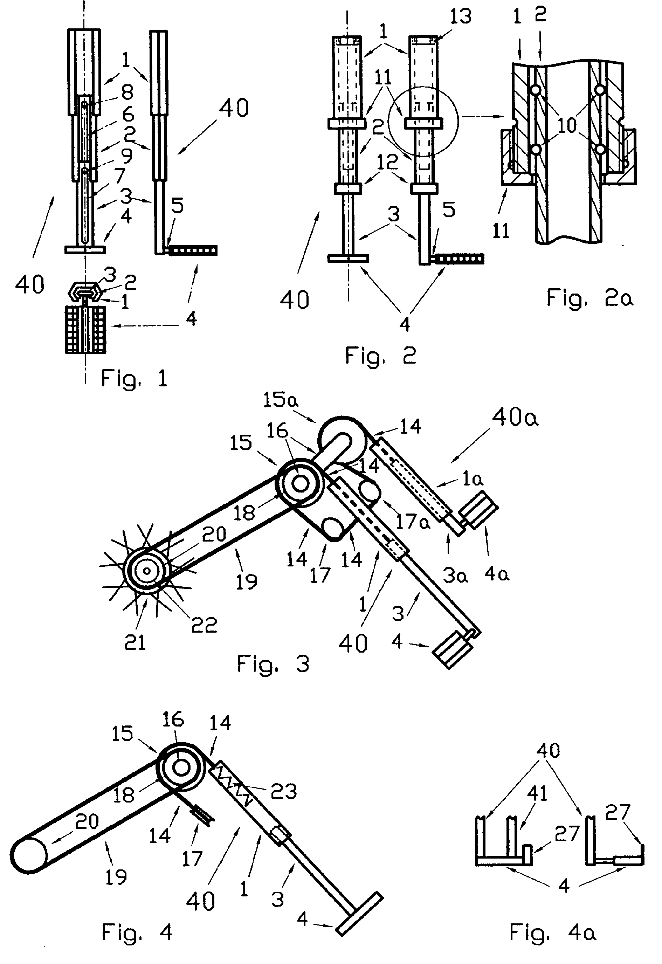

In Fig. 1 und Fig. 2 werden zwei unterschiedliche Baumöglichkeiten für teleskopische Arme vorgestellt, die aus je drei Elementen bestehen.

In Fig. 1 ist eine erste Ausführungsform eines teleskopartigen Arms 40 in Vorderansicht, Seitenansicht sowie Draufsicht dargestellt. Der Arm 40 besteht aus drei Teilen 1,2,3, die teleskopartig und linear gegeneinander bewegt werden können. Am endständigen Teil 3 ist am untersten Ende mittels einem Element 5 eine Pedale 4 befestigt. Eine Rotation der Pedale 4 rund um das Element 5 ist nicht unbedingt erforderlich, so wie dies bei den bekannten Antriebsmechanismen immer der Fall ist. Eine starre Verbindung kann sogar von Vorteil sein, wie weiter unten beschrieben wird. Der Arm 40 in Fig. 1 ist aus Profilen gebaut und seine Teile 2 und 3 sind mit länglichen Ausnehmungen 6 bzw. 7 und Bolzen 8 bzw. 9 vorgesehen, um deren Bewegung zu führen bzw. zu begrenzen.

In Fig. 2 und 2a ist eine zweite Ausführungsform eines teleskopartigen Arms 40 in Vorderansicht und Seitenansicht sowie in einer Detailansicht dargestellt. Bei dieser Ausführungsform sind zumindest die Teile 1 und 2 hohlzylindrisch ausgeführt und können teleskopartig ineinander geschoben werden. Teil 1 hat den größten Innendurchmesser und Teil 3 den geringsten. Zur Minimierung der Reibung zwischen den Teilen 1,2,3 sind Kugeln 10 vorgesehen, wie in Fig. 2a gezeigt. Weiters sind Muffen 11 und 12 vorgesehen, die die Bewegung der Teile 2 bzw 3 nach unten begrenzen. Ein Begrenzungselement 13 begrenzt die Bewegung des Teils 2 nach oben. Ähnlich kann die obere Begrenzung auch für Teil 3 erfolgen. Durch die geschlossene Konstruktionsweise der teleskopartig gebauten Ame 40 bzw. Linearführungen ist die Berührungsfläche der zwei oder mehreren ineinander schiebenden Teile 1,2,3 gut geschützt und garantiert für lange Zeit kleine Reibungskräfte.

Die Ausführung mit Rohren, wie in Fig. 2 dargestellt, erlaubt die Verwendung von Gleitbuchsen oder Kugellagerbuchsen, die bereits sehr entwickelt sind und niedrige Verluste durch Reibung aufweisen. Die Buchsen werden üblicherweise in einem Gehäuse befestigt und eine Welle kann durch die Buchsen bewegt werden. In Fig. 2 kann z.B. der zylindrische Teil 1 als Buchsengehäuse verwendet werden und der zylindrische Teil 2, gestützt von einer langen Buchse oder zwei Buchsen, kann hin und her bewegt werden. Für die Steigerung des Wirkungsgrades ist von Vorteil, wenn die Außenfläche des Teils 2 geschmiert wird. Um die Verschmutzung der Kleidung und den Kontakt mit Staub und Verschmutzung zu vermeiden ist z.B. ein Faltenbalg notwendig. Aber wenn die Buchsen an der Außenfläche des Teils 2 befestigt werden, laufen die Buchsen zusammen mit dem Teil 2 in Teil 1 und die Außenfläche der Buchsen bewegt sich auf der Innenfläche des Teils 1. Durch diese erfindungsgemäße Ausführung wird erreicht, dass eine Schmierung auf der Innenfläche des Teils 2 notwendig ist und das ist ein Bereich, der mit Staub, Schmutz oder Kleidung nicht in Berührung kommt.

Im Detail der Fig. 2a wird vereinfacht eine Variante mit Kugeln vorgestellt, wo die Kugeln in entsprechenden (nicht gezeichneten) Laufbahnen des Rohres 2 laufen, auf dem Prinzip einer Kugelbuchse, um die Reibung zu minimieren.

Die Variante mit Profilen, wie in Fig. 1, kann mit am z.B. Teil 2 befestigten reibungsarmen Materialien vorgesehen werden, um die Bewegung mit besserem Wirkungsgrad in Teil 1 zu realisieren, bzw. das Gleiche für die Bewegung des Teils 3 in Teil 2. Die Schmierung ist auch in diesem Falle nur auf den Innenseiten notwendig und jeder Teil kann mit einer Abdeckung versehen sein, um den Schutz gegen Staub und Schmutz zu realisieren, was zu einem besseren Wirkungsgrad führt.

Ein erfindungsgemäßer Antriebsmechanismus wird in Fig. 3 prinzipiell dargestellt. Denjenigen Elementen, die dem linken Fuß entsprechen, werden die gleichen Bezugszeichen wie für den rechten Fuß zugewiesen, jedoch mit dem Zusatz "a". Zwecks Vereinfachung wird eine Variante mit Armen 40,40a aus nur zwei Teilen 1, 3 bzw. 1a, 3a dargestellt. Es wird zunächst angenommen, dass die Teile 1 bzw. 1a am Vehikelrahmen ohne Bewegungsmöglichkeit befestigt sind. Wenn der rechte Fuß die Pedale 4 drückt, dann zieht der Teil 3 ein flexibles Zugmittel 14, das ohne Schlupf einen Freilauf 15 und damit eine Welle 16 in Bewegung setzt. Das Zugmittel 14 wird weiter über Führungsrollen 17 bzw. 17a und über einen Freilauf 15a zum Arm 40a bzw. zur Pedale 4a, bzw. zum Teil 3a, an dem die Pedale 4 befestigt ist, geführt. Diese Bewegung des Zugmittels 14 verursacht mittels des Freilaufs 15 eine Rotation der Welle 16 und bringt gleichzeitig die Pedale 4a nach oben in die Ausgangsposition des linken Fußes. Sobald sich die Pedale 4a hoch genug befindet, wird sie von dem linken Fuß gedrückt. Dadurch wird die weitere Rotationsbewegung der Welle 16 über den Freilauf 15a bei gleichzeitiger Bewegung der Pedale 4 nach oben fortgesetzt. Diese Rotationsbewegung der Welle 16 kann verwendet werden, um z.B. ein Rad, eine Bootsschraube, oder eine andere Welle in Bewegung zu setzen.

Im Falle eines Fahrrades, kann die Welle 16 ein Kettenrad 18 tragen, das über eine Kette 19 und ein Zahnrad 20 ein Rad, insbesondere das hintere Rad 21, in Bewegung setzt. Das hintere Rad 21 kann einen weiteren Freilauf 22 aufweisen, um Verluste zu minimieren. Ansonsten muss das hintere Rad 21 die Kette 19, das Kettenrad 18 und die Welle 16 antreiben, wenn der Anwender die Füße nicht mehr oder zu langsam bewegt.

Diese Konstruktionsweise hat den Nachteil, dass das Fahrrad nicht nach hinten geschoben werden kann, weil beide Pedale gehoben wären und als Folge das Zugmittel 14 nicht mehr gespannt wäre. Wenn dieser Nachteil wirklich stört, muss man eine nicht gezeichnete Kupplung verwenden, die die Rotationsbewegung der Welle 16 an das Kettenrad 18 überträgt.

Der Antriebsmechanismus fungiert dementsprechend als Linear-Rotations-Wandler.

Die Arme 40,40a sind in Fig. 4 mit einem elastischen Element 23, z.B. einer Feder, versehen. Zwecks Vereinfachung werden nur die Komponenten gezeichnet, die dem rechten Fuß entsprechen. Die Bauweise für den linken Fuß erfolgt analog.

Die Feder 23 wird von Teil 3 gedrückt, wenn der linke Fuß die linke Pedale 4a nach unten bewegt. Das Zugmittel 14 zieht die rechte Pedale 4 nach oben, der Teil 3 wird von der Feder 23 abgebremst und die Feder 23 übernimmt die Energie oder jenen Teil der Energie, welcher sonst verloren gehen würde, wenn der linke Fuß von einer bestimmten Geschwindigkeit abgebremst wird, um dann mit ungefähr gleicher Geschwindigkeit in die Gegenrichtung bewegt zu werden. Die Feder wird mit Energie geladen, welche:
1. den rechten Fuß in seiner Bewegung nach unten unterstützt
2. den linken Fuß über das Zugmittel 14 und die Umlenkscheiben 17 und 17a nach oben zieht und
3. eine kontinuierliche Belastung der Welle 16 in dem Moment, wo der rechte Fuß seine Bewegung vom oberen toten Punkt zum unteren toten Punkt beginnt, gewährleistet.

Die Feder 23 hilft somit jedem Pedal 4, indem es den aktiven Hub anfängt. Die Feder 23 kann beispielsweise zwischen Teil 3 und dem obersten Ende des Teils 1 zusammengedrückt werden, indem sie sich auf Teil 3 abstützt ohne tatsächlich an diesem befestigt zu werden und dabei vom Seil senkrecht gehalten wird. Auch kann sich die Feder 23 auf der Außenfläche eines Teils 1 bis 3 befinden bzw. könnte zwischen Pedal 4 und Teil 2 zusammengedrückt werden. Es können auch mehrere Federn 23 vorhanden sein.

Wenn der Arm 40,40a aus mehr als zwei Teilen 1,1a,2,2a,3,3a besteht, kann jeder Teil 1,2,3 in ähnlicher Weise mit einem elastischem Element 23 versehen werden, mit der Ausnahme desjenigen Teiles, der die Pedale 4,4a trägt. In Fig. 3 und Fig. 4 ist dies der Teil 3 bzw. 3a.

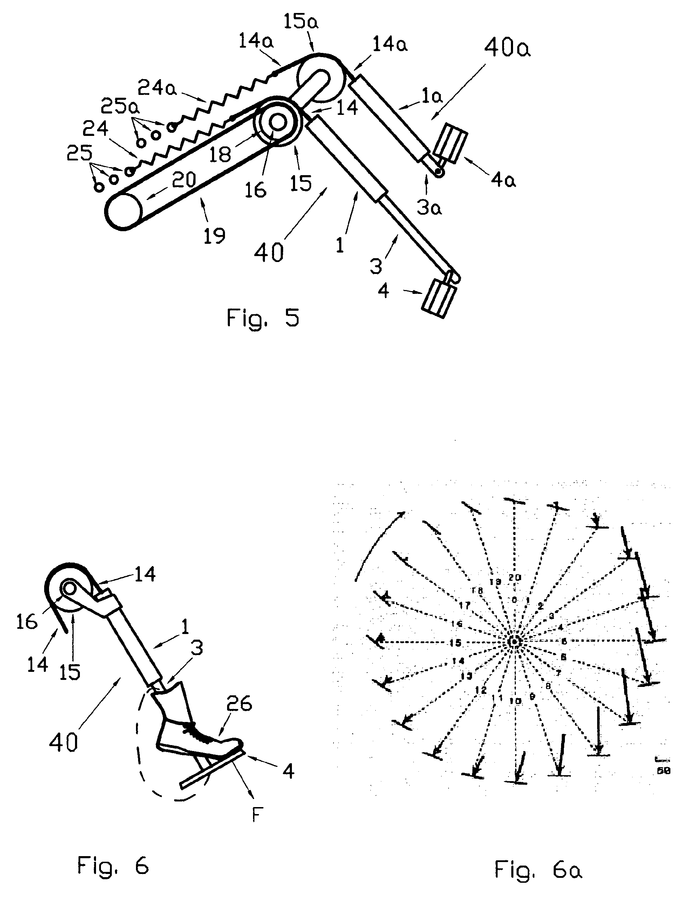

In Fig. 4a ist eine weitere vorteilhafte Ausgestaltung eines Armes 40 dargestellt. Ein Pedalarm 40 wie in Fig. 2, bei dem keine Maßnahme gegen ein Verdrehen des Pedals 4 um die Längsachse des Armes 40 vorgesehen ist, hat den Nachteil, dass das Pedal 4 unter Einwirkung der Kraft F in Fig. 6, nicht nur nach unten bewegt wird, sondern auch eine leichte Rotationsbewegung um die Längsachse - wie in Fig. 6 gegen den Uhrzeigersinn bzw. für den linken Fuß in Uhrzeigersinn - bekommt und es anstrengend ist, das Pedal unter dem Fuß zu stabilisieren. Um diesen Nachteil zu beseitigen, wird in der Ausführungsform gemäß Fig. 4a eine Leiste 27 verwendet. Diese Leiste 27 kann vorne rechts am rechten Pedal 4, bzw. vorne links am linken Pedal 4a, eventuell einstellbar, befestigt werden. Das Pedal 4,4a kann sich dann unter dem Fuß nicht mehr verdrehen, da sich die Leiste 27 an Sohle bzw. Fuß seitlich abstützt. Die Leiste 27 kann auch länger sein, indem eine Alu-Leiste auf der gesamten Länge des Pedals 4,4a befestigt ist.

Eine weitere in Fig. 4a dargestellte Möglichkeit, das Pedal 4,4a zu stabilisieren, besteht in der Anordnung jeweils eines zusätzlichen zweiten Pedalarms 41, der parallel zum Arm 40 verläuft. Dieser zweite Arm 41, der gleich wie der Arm 40 gebaut sein kann, bringt auch den Vorteil, dass dünnere Rohre für den Bau der Teleskoparme verwendet werden können. Die Kraft F in Fig. 6 wird von zwei Armen, 40 und 41, aufgenommen, jedoch mit dem Nachteil einer Gewichtssteigerung.

Der in Fig. 3, 4 und 4a beschriebene Mechanismus erfordert eine perfekte Synchronisation der Füße. Mit der Variante in Fig. 5 können die Füße vorteilhafterweise unabhängig voneinander bewegt werden. Jede Pedale 4,4a setzt das ihr zugeordnete eigene Zugmittel 14 bzw. 14a in Bewegung und spannt je ein weiteres elastisches Element 24, z.B. eine Feder, 24 bzw. 24a. Diese weiteren elastischen Elemente 24,24a haben die Aufgabe, die Pedale 4,4a in ihre jeweils oberen Ausgangspunkte zu bringen. Die elastische Kraft der elastischen Elemente 24,24a kann eingestellt werden, indem die Befestigungspunkte der Feder in den Löchern 25 bzw. 25a geändert werden.

Eine wesentliche Verbesserung des teleskopartigen Armes 40,40a wird erreicht, wenn jeder Arm 40,40a, wie in Fig. 6 dargestellt, schwenkbar gelagert ist. Das erlaubt dem Fuß 26 eine Bewegung wie in Fig. 6 mit unterbrochener Linie darstellt ist. Damit wird erreicht
1. dass der Fuß nicht mehr die anstrengende lineare Hin- und Her-Bewegung mit abrupten Umkehrpositionen vollzieht, sondern er bewegt sich auf einer Kurve, wie bei dem üblichen Fahrrad und
2. dass die Füße sich natürlich, in entgegengesetzten Richtungen, bewegen, d.h. wenn einer nach unten geht, geht der andere nach oben, wenn einer nach vorne geht, geht der andere nach hinten.

Bei linearen Antriebsmechanismen des Standes der Technik muss der Anwender die Bewegungsrichtung der Füße von oben nach unten und umgekehrt abrupt ändern, was anatomisch eine Belastung darstellt und auch, insbesondere bei dem Richtungswechsel nach oben zu Energieverlusten führt, weil das Gewicht des Beines am Ende des Hubes zunächst schnell abgebremst und dann nach oben beschleunigt werden muss. Die kinetische Energie des relativ schweren Beines geht dabei verloren, weil die Pedale 4 nur in eine vorgegebene Richtung bewegt werden können, während die optimale Richtung nicht genau definierbar ist. Diese optimale Richtung ändert sich von der obersten bis zur untersten Position der Pedale 4 und ist abhängig von dem Winkel zwischen Oberschenkel und Unterschenkel und von dem Winkel zwischen Wirbelsäule und Oberschenkel. Diese Winkeln ändern sich ständig und deshalb sollte der Antriebsmechanismus eine bestimmte Freiheit der Pedalführung gewährleisten, z.B. durch die Verwendung von schwenkbaren Armen 40.

Das Diagramm in Fig. 6a zeigt, wie ein durchschnittlicher Fahrradfahrer das Pedal 4 betätigt. Wenn angenommen wird, dass der Fahrradfahrer instinktiv das Pedal 4 in die für ihn effizienteste Richtung drückt, dann kann behaupt werden, dass ein perfekter Antriebsmechanismus die Bewegung des Pedals 4 im obersten Bereich nach unten und ein wenig nach vorne, während im untersten Bereich nach unten erlauben sollte. Dass heißt, dass jedes Pedal 4,4a in eine bestimmte Richtung bewegt werden muss und das unabhängig von der Bewegungsrichtung des anderen Pedals 4. Es wurde bei manchen Konstruktionen berücksichtigt, dass sich die beste Richtung für die Betätigung des Pedals ständig ändert, allerdings mit dem Nachteil einer starren Verbindung zwischen den zwei Pedalführungen. Der Nachteil ist aus dem Diagramm in Fig. 6a ersichtlich: wenn beispielsweise das rechte Pedal 4 die Bewegung nach unten beginnt, sollte der rechte Fuß dieses Pedal 4 nach unten und etwas nach vorne drücken und diese ideale Richtung ist nicht möglich weil das linke Pedal 4a die unterste Lage gerade erreichte und der linke Fuß jetzt plötzlich nach vorne bewegt werden müsste, weil die Pedalführungen miteinander verbunden sind.

Dieses Problem wird gemäß Fig. 6 durch Verwendung von unabhängig voneinander schwenkbaren Armen 40,40a gelöst. Nicht dargestellte, eventuell einstellbare Einrichtungen, begrenzen die Bewegungsfreiheit der Pedalarme 40 unter einem bestimmten Winkel, um die Kollision der Füße, Pedale 4 oder Pedalarme 40 mit den Rädern eines Fahrrades zu vermeiden.

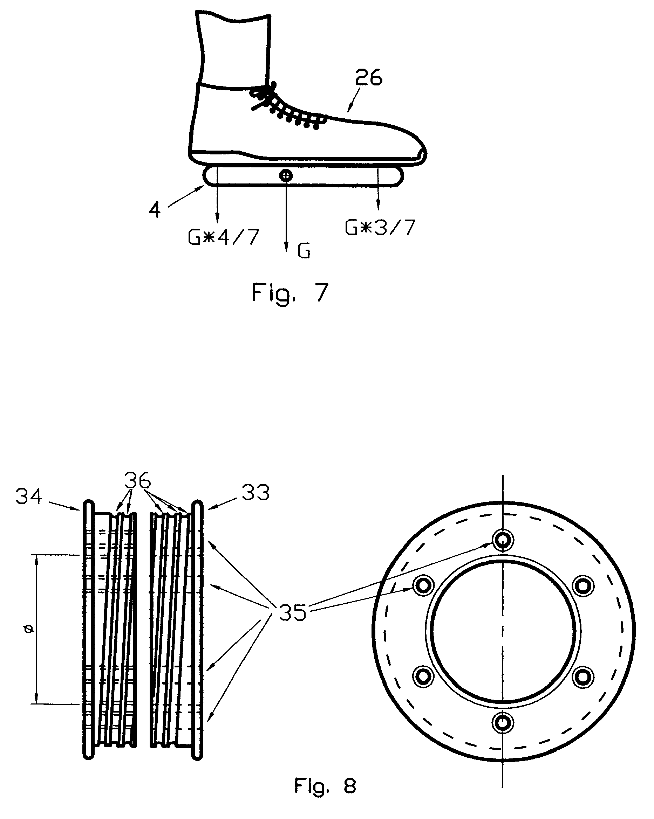

Eine weitere Verbesserung ist die lange bzw. großflächige Pedale 4, die gleichzeitig mit Vorderfuß und Ferse gedrückt werden kann. Man erreicht damit eine bessere Verwendung der Bein- und Fußmuskulatur, weil der Anwender mit der gleichen Anstrengung eine größere Kraft aufbringen kann. Der Unterschied ist mit einem einfachen Versuch leicht merkbar: man vergleicht das "normale" Stehen auf den gesamten Sohlen mit dem Stehen nur auf den Vorderfüßen, wie dies bei herkömmlichen Pedalen der Fall ist. Im letzteren Fall stellt man schnell fest, das der Körper spürbar mehr angestrengt wird, um den gleichen Effekt zu erreichen, nämlich das eigene Gewicht zu stützen. Messungen bei stehenden durchschnittlichen Personen ergeben, wie in Fig. 7 dargestellt, dass etwa 4/7 des Körpersgewichtes (G) die Fersen und der Rest die Vorderfüße belasten. Diese Erkenntnisse werden genützt, indem die Pedale 4 am jeweiligen Arm 40,40a asymmetrisch d.h. nicht in der Mitte befestigt wird, so wie auch in Fig. 6, wo die Pedale 4 eine größere Länge vor dem Teil 3 aufweist.

Die Pedale 4 wird am Arm 40,40a starr montiert, so dass während der Funktion keine Veränderung des eingestellten Winkels zwischen dem Arm 40,40a und der Pedalenfläche eintreten kann. Das bringt den Vorteil, dass der Weg der Pedale 4 verlängert wird, indem die Pedale 4 mit Ferse und Vorderfuß gedrückt wird bis das Bein völlig ausgestreckt ist und dennoch kann man die Pedale 4 weiter noch mit dem Vorderfuß zusätzlich bewegen, so wie in Fig. 6 dargestellt. Man kann eine Einstellungsmöglichkeit für den Winkel zwischen der Pedalenfläche und dem Arm 40,40a vorsehen, um dem Komfortgefühl unterschiedlicher Personen entsprechen zu können.

Der teleskopartige Arm 40 in Fig. 6 ist rund um die Welle 16 schwenkbar, wie dies durch Pfeile angedeutet ist. Wenn beide Arme 40,40a schwenkbar sind, erzielt man folgende Vorteile:
1. Die Füße können - in etwa wie mit unterbrochener Linie in Fig. 6 dargestellt, also ohne abrupte Bewegungsrichtungsänderung, die für den Körper unnatürlich und anstrengend ist - bewegt werden. Diese kurvenförmige Bewegung wird von der Pedale 4 unterstützt, weil sobald der Fuß 26 die Pedale 4 nur mit dem Vorderfuß drückt, die vorhandene Kraft (F) eine Bewegung der Pedale 4 gleichzeitig nach unten und nach links rund um den Freilauf 15 verursacht.
2. Es wird eine kleine zusätzliche Länge des Zugmittels 14 benötigt, um die Bewegung der Pedale 4 nach links zu erlauben, weil das Zugmittel 14 etwas mehr auf dem Freilauf 15 gewickelt wird. Das heißt, dass der erreichte Rotationswinkel des Freilaufes 15 etwas größer ausfällt als die Länge, auf der das Bein ausgestreckt wird: die Bewegung des Beines nach hinten wird in eine zusätzliche Drehbewegung des Freilaufes umgesetzt.

Eine bestimmte Synchronisation der beiden Beine ist notwendig, kann aber bei einer Ausführung des Antriebsmechanismus mit elastischen Elementen 24 und 24a wie in Fig. 5 vermieden werden.

Wenn weiters die Pedale 4 um die Längsachse des Arms 40,40a drehbar ist, wie es beispielsweise die Bauweise in der Fig. 2 erlaubt, hat man zwei zusätzliche Vorteile:
1. Die Füße können sich auf den Pedalen 4 ähnlich wie beim Gehen stützen, wo die linke und die rechte Sohle ein Trapez bilden. Es handelt sich hierbei um eine natürliche Haltung der Füße, weshalb auch ein besserer Komfort zu erwarten ist.
2. Die Pedale 4,4a können zur Innenseite des Antriebsmechanismus gedreht werden, um weniger Platz fürs Parken oder Transport in Anspruch zu nehmen.

Das Zugmittel 14 treibt, wie beschrieben, den Freilauf 15 schlupffrei an. Der Freilauf 15 treibt ein entsprechendes Antriebsrad 18 an. Im Falle einer Kette 19 ist das Antriebsrad ein Kettenrad 18. Vorteilhaft kann die Verwendung eines Kabels oder Seils als Zugmittel 14 sein, beispielsweise in der Variante aus Fig. 3.

Das entsprechende Antriebsrad 18 kann bei Verwendung eines Kabels wie in Fig. 8 realisiert werden. Dieses Antriebsrad 18 besteht aus zwei Hälften 33 und 34, die durch Bohrungen 35 mit Schrauben zusammengefügt sind. Das Kabel wird mehrmals auf jede Hälfte gewickelt, eventuell auf den Rillen 36 und zwischen den Teilen 33 und 34 festgeschraubt. Ein Gewinde mit Durchmesser Φ ermöglicht die Befestigung auf dem Freilauf 15.

Ein Antriebsmechanismus, gebaut unter Betrachtung der oben dargestellten Verbesserungsvorschläge, vereint den theoretischen Wirkungsgrad von 100% eines linearen Antriebes mit dem größten Vorteil des Kurbelantriebes, nämlich der sanften Änderung der Bewegungsrichtung der Füße.

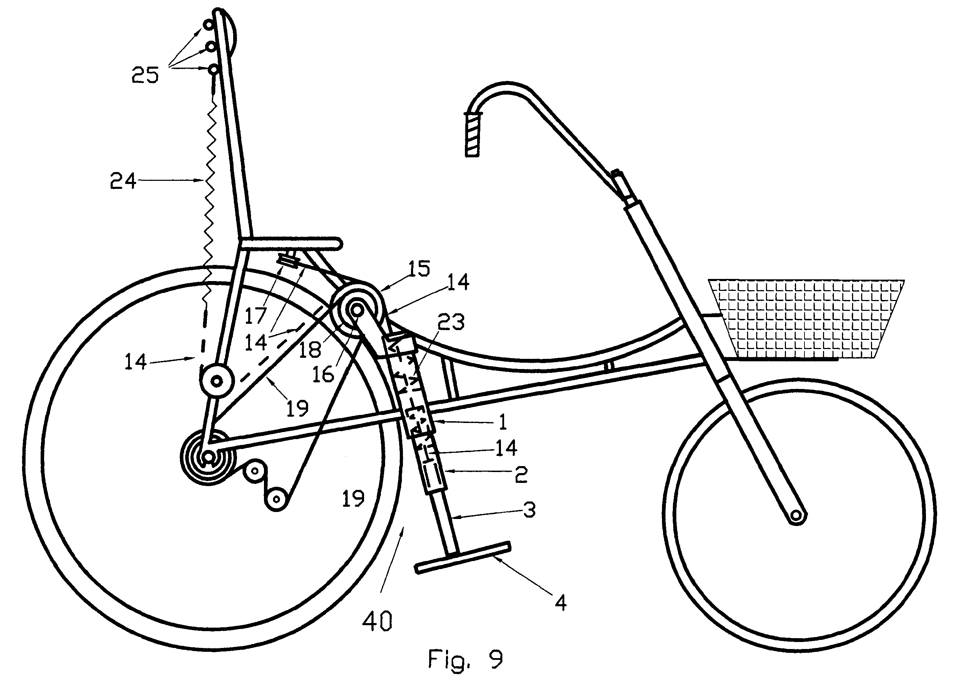

Fig. 9, 10 und Fig. 11 zeigen Ausführungsformen eines Fahrrades mit dem erfindungsgemäßen Antriebsmechanismus.

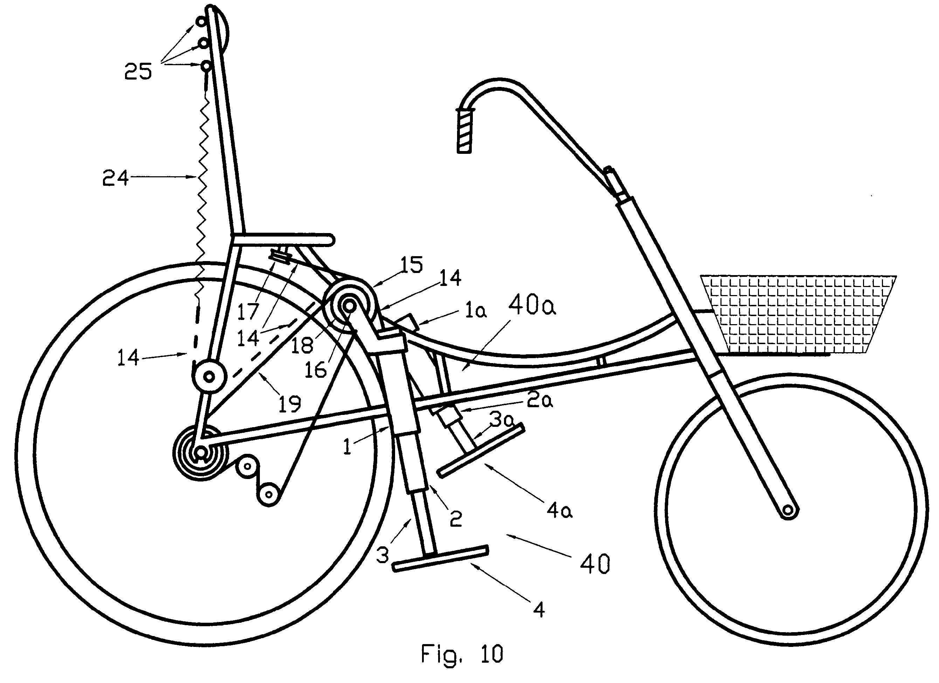

In Fig. 9 und 10 ist ein Antriebsmechanismus mit schwenkbaren teleskopartigen Armen 40,40a dargestellt. Die Übersetzung kann über Kettenschaltung oder Nabenschaltung funktionieren, wie beim herkömmlichen Fahrrad.

Eine erste, mit durchgehender Linie gezeichnete, Ausführungsmöglichkeit ist mit Umlenkscheiben 17 und 17a versehen. Diese Ausführungsform entspricht dem Antriebsmechanismus gemäß Fig. 3 und 4.

Eine weitere, mit unterbrochener Linie gezeichnete, Ausführungsmöglichkeit ist mit elastischen Elementen 24 (bzw. 24a für die nicht sichtbare linke Seite) und Zugmitteln 14 (bzw. 14a) versehen. Diese Ausführungsform entspricht dem Antriebsmechanismus gemäß Fig. 5.

In Fig. 10 ist erkennbar, dass die beiden Arme 40,40a am Rahmen befestigt sind und gegeneinander verschwenkbar sind, und als Schwenkachse die Welle 16 fungiert. Die beiden Arme 40,40a sind demgemäss auf der Welle 16 gelagert bzw. von dieser abgehängt und um die Längsachse dieser Welle 16 verschwenkbar.

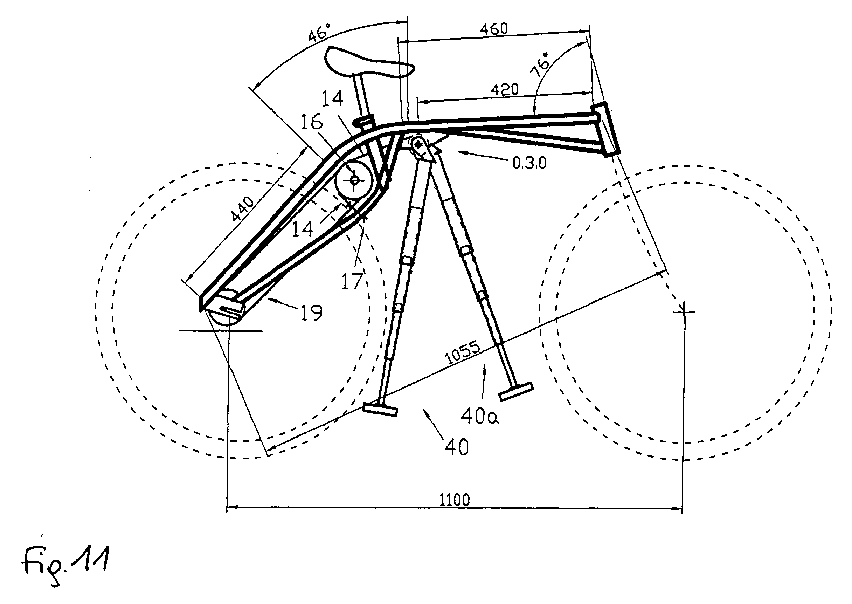

In Fig. 11 ist eine Ausführungsform dargestellt, bei der die beiden Arme 40,40a ebenfalls am Rahmen angeordnet sind und gegeneinander verschwenkbar am Rahmen gelagert sind. Im Unterschied zur Ausführungsform gemäß Fig. 9 und 10 fällt der Anlenkpunkt bzw. Schwenkpunkt der Arme 40,40a nicht mit der Wellenachse zusammen. Die Welle 16 ist weiter hinten unter dem Sattel angeordnet.

Die Arme 40 bestehen jeweils aus fünf Teilen (1,2,3,4,5), die teleskopartig ineinander verschiebbar sind.

## Patentansprüche

1. Antriebsmechanismus, insbesondere für Fahrräder, umfassend zumindest einen, vorzugsweise zwei, unter Krafteinwirkung, insbesondere über eine Pedale (4,4a), linear in ihrer Länge veränderbare Arme bzw. Linearführungen (40,40a), wobei zumindest ein flexibles Zugmittel (14,14a), beispielsweise eine Kette, ein Seil oder ein Kabel, vorgesehen ist, das durch die Längenveränderung des jeweiligen Arms (40,40a) kraftbeaufschlagt wird und seine Bewegung, vorzugsweise schlupffrei, auf zumindest eine Welle bzw. Antriebswelle (16) übertragen kann, **dadurch gekennzeichnet, dass** die Arme (40,40a), vorzugsweise unabhängig voneinander, gegeneinander verschwenkbar gelagert sind.

2. Antriebsmechanismus nach Anspruch 1, **dadurch gekennzeichnet, dass** die Arme (40,40a) um eine gemeinsame Achse, insbesondere um die Achse der Antriebswelle (16), schwenkbar gelagert sind.

3. Antriebsmechanismus nach Anspruch 1 oder 2, **dadurch gekennzeichnet, dass** die Arme (40,40a) teleskopartig ausgebildet bzw. linear längenverstellbar geführt sind, insbesondere mit jeweils zumindest zwei, vorzugsweise drei oder mehr, teleskopartig ineinander einschiebbaren bzw. gegeneinander verschiebbaren Teilen (1,2,3) bzw. mit zumindest einem inneren ersten Teil (1,1 a) und einem endständigen äußeren Teil (3,3a), an dem vorzugsweise die Pedale (4,4a) zur Kraftbeaufschlagung angeordnet ist.

4. Antriebsmechanismus nach einem der vorangehenden Ansprüche, **dadurch gekennzeichnet, dass** beiden Armen (40,40a) ein einziges, gemeinsames Zugmittel (14) zugeordnet ist bzw. dass ein einziges Zugmittel (14) vorgesehen ist, das an seinen beiden Enden mit jeweils einem Arm (40,40a) bzw. Pedal (4,4a) verbunden ist (Fig. 3) oder dass jedem Arm (40,40a) jeweils ein Zugmittel (14,14a) zugeordnet ist bzw. dass zwei oder mehr separate Zugmittel (14,14a) vorgesehen sind, die an jeweils einem Ende mit jeweils einem Arm (40,40a) verbunden sind (Fig. 5).

5. Antriebsmechanismus nach einem der vorangehenden Ansprüche, **dadurch gekennzeichnet, dass**, insbesondere an jedem Arm (40,40a), zumindest ein elastisches Element (23), insbesondere eine Feder, vorgesehen ist, das der Längenverringerung bzw. Längsstauchung des Armes (40,40a) entgegenwirkt bzw. das jeweilige Pedal (4,4a) nach unten in eine gestrecktere Ausgangslage drückt (Fig. 3), wobei das jeweilige elastische Element (23) insbesondere zwischen jeweils zwei Teilen (1,2,3) des Armes (40,40a) oder zwischen einem Teil (1,2,3) und dem jeweiligen Pedal (4,4a) angeordnet ist.

6. Antriebsmechanismus nach einem der vorangehenden Ansprüche, **dadurch gekennzeichnet, dass**, insbesondere an jedem Arm (40,40a), zumindest ein weiteres elastisches Element (24), insbesondere eine Feder, vorgesehen ist, das der Längenausdehnung bzw. Längsstreckung des Armes (40,40a) entgegenwirkt bzw. das die Pedale (4) in die jeweils oberste Ausgangslage bringt bzw. dem elastischen Element (23) entgegenwirkt (Fig. 5), wobei das jeweilige weitere elastische Element (24) insbesondere mit dem jeweiligen Zugmittel (14,14a) und/oder mit dem jeweils endständigen äußeren Teil (3,3a) oder einem anderen Teil (1,2) oder der Pedale (4,4a) verbunden ist.

7. Antriebsmechanismus nach einem der vorangehenden Ansprüche, **dadurch gekennzeichnet, dass** die jeweiligen Pedale (4) starr bzw. unbeweglich am jeweiligen Arm (40,40a) befestigt sind und während der Kraftbeaufschlagung der Pedale (4) keine Veränderung des eingestellten Winkels zwischen dem Arm (40,40a) und der Fläche der Pedale (4) eintritt oder dass jede der Pedalen (4,4a) um die Längsachse des Armes (40,40a) drehbar ist und/oder dass zur Verhinderung einer Rotation des Pedals (4,4a) um die Längsachse des Armes (40,40a) parallel zum jeweiligen Arm (40,40a) jeweils ein weiterer, insbesondere funktionell zum Arm (40,40a) gleichartiger, Arm (41,41a) angeordnet ist und/oder dass auf dem jeweiligen Pedal (4,4a), insbesondere an dessen Außenseite, vorzugsweise über die gesamte Längserstreckung des Pedals (4,4a) jeweils eine Leiste (27,27a) angeordnet ist.

8. Antriebsmechanismus nach einem der vorangehenden Ansprüche, **dadurch gekennzeichnet, dass** die Pedale (4) lang bzw. groß genug sind, um mit der Ferse und dem Vorderfuß eines Fußes üblicher Größe betätigt werden zu können und/oder dass die Pedale (4) asymmetrisch bzw. nicht mittig an den Armen (40,40a) angebracht sind, und insbesondere in Fahrtrichtung vor dem Arm (40,40a) eine größere Fläche des Pedals (4) ausgebildet ist.

9. Antriebsmechanismus nach einem der vorangehenden Ansprüche, **dadurch gekennzeichnet, dass** auf der Antriebwelle (16) ein Freilauf (15) angeordnet ist, auf den das Zugmittel (14) einwirkt, wobei der Freilauf (15), insbesondere über die Antriebwelle (16), gegebenenfalls zumindest ein Antriebsrad (18), beispielsweise ein Kettenrad, antreibt bzw. der Freilauf (15) und/oder die Antriebwelle (16) mit einem Antriebsrad (18) in Wirkverbindung stehen.

10. Antriebsmechanismus nach Anspruch 9, **dadurch gekennzeichnet, dass** das Antriebsrad (18) aus je zwei miteinander verbundenen Hälften (33,34) gebildet ist, wobei das Zugmittel (14) zur Gewährleistung des schlupffreien Antriebs zwischen den zwei Hälften (33,34) befestigt ist.

11. Fahrzeug, insbesondere muskelkraftgetriebenes Fahrzeug, vorzugsweise Fahrrad, mit einem Antriebsmechanismus gemäß einem der Ansprüche 1 bis 10.

12. Fahrrad nach Anspruch 11, **dadurch gekennzeichnet, dass** der Antriebsmechanismus am Rahmen des Fahrrades befestigt ist, wobei beidseitig des Rahmens jeweils ein Arm (40,40a) angeordnet ist und das zumindest eine flexible Zugmittel (14,14a), insbesondere eine Kette (19), das Hinterrad (21) antreibt und wobei die Arme (40,40a) vorzugsweise in der Achse der Welle (16) gelagert sind, die den Schwenkpunkt der Arme (40,40a) bildet.

13. Fahrrad nach Anspruch 11 oder 12, **dadurch gekennzeichnet, dass** die Welle (16) und die Lagerung der Arme (40,40a) am Rahmen an unterschiedlichen Positionen ausgebildet sind bzw. nicht zusammenfallen, und die Welle (16) gegenüber der Lagerung der Arme (40,40a) insbesondere in Richtung des Hinterrades bzw. des Sattel nach hinten versetzt ist.

14. Fahrrad nach einem der Ansprüche 11 bis 13, **dadurch gekennzeichnet, dass** das elastische Element (24) am Sattel befestigt ist.
